# EUROPEAN PATENT SPECIFICATION

(11) **EP 3 460 328 B1**
(45) Date of publication and mention of the grant of the patent: **30.06.2021**
(21) Application number: 17831099.1
(22) Date of filing: 20.07.2017
(51) Int. Cl.: F23G 7/06, D01F 9/12, F23G 5/16, F23G 5/32

(54) **EXHAUST GAS TREATMENT METHOD, EXHAUST GAS TREATMENT DEVICE, AND CARBON FIBER MANUFACTURING EQUIPMENT**
ABGASBEHANDLUNGSVERFAHREN, ABGASBEHANDLUNGSVORRICHTUNG UND KOHLEFASERHERSTELLUNGSEINRICHTUNG
PROCÉDÉ ET DISPOSITIF DE TRAITEMENT DES GAZ D'ÉCHAPPEMENT, ET INSTALLATION DE FABRICATION DE FIBRE DE CARBONE

(30) Priority: 20.07.2016 JP 2016142873
(43) Date of publication of application: 27.03.2019
(73) Proprietor: Taiyo Nippon Sanso Corporation, Tokyo 142-8558 (JP)
(72) Inventor: YAMAMOTO Yasuyuki, Tokyo 142-8558 (JP); HAGIHARA Yoshiyuki, Tokyo 142-8558 (JP); IINO Kimio, Tokyo 142-8558 (JP); ABE Tomonobu, Tokyo 142-8558 (JP)
(74) Representative: HGF
(86) International application number: PCT/JP2017/026273
(87) International publication number: WO 2018/016583

(56) References cited:
- EP-A1- 2 711 066
- WO-A2-2012/002830
- JP-A- S5 385 975
- JP-A- S58 164 922
- JP-A- 2009 174 078
- JP-A- 2012 067 419
- JP-A- 2012 067 977
- JP-A- 2013 032 608
- JP-A- 2014 528 052
- JP-A- 2015 038 412
- JP-A- 2016 133 286
- JP-U- 3 106 971
- US-A1- 2014 248 202

## Description

### TECHNICAL FIELD OF THE INVENTION

The present invention relates to an exhaust gas treatment method, an exhaust gas treatment device, and a carbon fiber manufacturing equipment.

### RELATED ART

Carbon fibers have been used as a reinforcement for various materials because they have superior specific strength, specific modulus, het resistance, chemical resistance, and so on. In general, when carbon fibers are produced, the production method includes a plurality of steps in order to obtain desired properties. For example, when acrylic fiber is used as a precursor of carbon fibers, flameproofing fiber is produced by pre-oxidizing in the air at 200 to 300°C in a first step (flameproofing step). Then, carbon fibers are produced by carbonizing at 300 to 2,000°C in an inert atmosphere (carbonizing step). In addition, when carbon fibers having a high elastic modulus are produced, the carbon fibers obtained in the carbonizing step is graphitized at 2,000 to 3,000°C in an inert atmosphere (graphitizing step).

However, during the flameproofing step, the carbonizing step, and the graphitizing step, an exhaust gas is generated. Specifically, since the carbonizing step, and the graphitizing step are carried out in an inert atmosphere, gas containing hydrogen cyanide, ammonia, carbon monoxide, carbon dioxide, methane, tar, etc. which are decomposed components of the flameproofing fiber, and the inert gas, such as nitrogen, as a base component (below, exhaust gas generated in the carbonizing step and the graphitizing step is denoted respectively by "carbonizing step-exhaust gas" and "graphitizing step-exhaust gas") is generated (Patent Document No. 3).

On the other hand, since the flameproofing step is carried out in the air, gas containing hydrogen cyanide, ammonia, carbon monoxide, carbon dioxide, methane, tar, and so on which are decomposed components of the acrylic fiber, and oxygen, nitrogen, and argon, as base components (below, exhaust gas generated in the flameproofing step is denoted by "flameproofing step-exhaust gas") is generated (Patent Documents Nos. 2 and 4).

As explained above, the exhaust gas which is generated in the flameproofing step, the carbonizing step, and the graphitizing step contains strong harmful gas, such as hydrogen cyanide, ammonia, and so on. Accordingly, an exhaust gas treatment method for detoxifying the exhaust gas generated in these steps is required.

As a conventional exhaust gas treatment method, a method in which the flameproofing step-exhaust gas and the carbonizing step-exhaust gas are blown into one treatment furnace (combustion chamber), and decomposed by air combustion has been well-known (For example, Patent Document No. 1). As another conventional exhaust gas treatment method, a method in which the flameproofing step-exhaust gas and the carbonizing step-exhaust gas are decomposed by air combustion in a separate treatment furnace, respectively has been well-known (For example, Patent Document No. 2).

### PRIOR ART DOCUMENTS

### PATENT DOCUMENTS

[Patent Document 1] Japanese Unexamined Patent Application, First Publication No. 2011-021779
[Patent Document 2] Japanese Unexamined Patent Application, First Publication No. 2001-324119
[Patent Document 3] Japanese Unexamined Patent Application, First Publication No.2012-067419
[Patent Document 4] Japanese Unexamined Patent Application, First Publication No. 2003-113538

WO 2012/002830 discloses a method for low-emission incineration of waste gases, particularly low-calorific waste gases, in combustion chambers of industrial power installations and a system used for the implementation thereof, applicable, particularly, in combustion chambers of reheating furnaces and metallurgical furnaces, as well as heating boilers and power boilers.

EP 2711066 discloses a gas treatment plant for treating an industrial waste gas comprising carbon dioxide. The plant comprises an oxyfuel boiler and a pipe arranged for forwarding the industrial waste gas to the oxyfuel boiler and injecting the industrial waste gas into the oxyfuel boiler to participate in the combustion process occurring in the boiler to cause oxidation of at least a portion of the content of at least one oxidizable substance of the industrial waste gas. The gas treatment plant further comprises a gas cleaning system, and a pipe for forwarding a carbon dioxide rich flue gas generated in the boiler to the gas cleaning system for being cleaned therein, such that an at least partly cleaned carbon dioxide rich flue gas is formed.

### DISCLOSURE OF THE INVENTION

### PROBLEMS TO BE SOLVED BY THE INVENTION

Incidentally, the flameproofing step-exhaust gas, and the carbonizing step-exhaust gas and the graphitizing step-exhaust gas are different from each other in the concentration of hydrogen cyanide, etc., and the composition of the base gas (existence of oxygen). Therefore, when the flameproofing step-exhaust gas, and the carbonizing step-exhaust gas and the graphitizing step-exhaust gas are decomposed in one treatment furnace, there is a problem that hydrogen cyanide, ammonia, etc. cannot be sufficiently decomposed, and a large amount of NO_{X} is generated by the decomposition.

In addition, when the treatment capacity of the treatment device increases due to an increase in size of the treatment device, it is necessary to increase the amount of air or the like necessary for the combustion treatment. Accordingly, in the conventional technology, it is necessary to increase the capacity of the treatment gas dust collector / exhaust blower.

Further, when oxygen-enriched air is used in place of air for the purpose of increasing the treatment capacity, an oxygen supply source is necessary. Accordingly, there is concern that the cost for treatment will increase. In order to suppress the cost increase, it is necessary to optimize the exhaust gas treatment system as a whole.

In addition, when the flameproofing step-exhaust gas, the carbonizing step-exhaust gas and the graphitizing step-exhaust gas are decomposed in separate treatment furnaces, there is a problem that hydrogen cyanide, ammonia, and so on, can be sufficiently decomposed, but an amount of fuel used for combustion increases. In addition, since the number of treatment equipment increases, there is a problem that the equipment cost and the maintenance cost increase.

In consideration of the above-described problems, an object of the present invention is to provide an exhaust gas treatment method which prevents the generation of NOx, and treats the flameproofing step-exhaust gas and the carbonizing step-exhaust gas with a small amount of fuel, an exhaust gas treatment device which can treat the flameproofing step-exhaust gas and the carbonizing step-exhaust gas with a small amount of fuel, and an exhaust gas treatment system which can suppress a cost increase due to an increase in the amount of gas treated.

### MEANS FOR SOLVING THE PROBLEM

In order to solve the above problems, the present invention provides the following exhaust gas treatment devices, exhaust gas treatment methods, a carbon fiber manufacturing equipment, and carbon fiber manufacturing equipment. Viewed from a first aspect, there is provided an exhaust gas treatment device which is configured to treat exhaust gases discharged from steps of manufacturing carbon fiber from a fibrous substance,
wherein the exhaust gas treatment device includes:
a first combustion furnace which is configured to combust a carbonizing step-exhaust gas discharged from a carbonizing step in which the fibrous substance is carbonized in an inert gas atmosphere; and
a second combustion furnace which is provided at a post-stage of the first combustion furnace, and configured to combust a flameproofing step-exhaust gas discharged from a flameproofing step in which the fibrous substance is flameproofed in an air atmosphere and a first combusting step-exhaust gas discharged from the first combustion furnace;
the first combustion furnace and the second combustion furnace communicate through a throttle portion;
the first combustion furnace is provided with a first burner which is configured to combust a carbonizing step-exhaust gas by a fuel and an oxygen-enriched air; and
an air separation device which is configured to produce nitrogen for producing the inert gas atmosphere in the carbonizing step and the oxygen-enriched air supplied into the first burner.

The exhaust gas treatment device may further include a second burner which is configured to supply a fuel into the second combustion furnace.

Viewed from a second aspect, there is provided an exhaust gas treatment method for treating exhaust gases discharged from steps of manufacturing carbon fiber from a fibrous substance,
wherein the exhaust gas treatment method includes:
a first combusting step in which a carbonizing step-exhaust gas discharged from a carbonizing step in which the fibrous substance is carbonized in an inert gas atmosphere is treated; and
a second combusting step in which a flameproofing step-exhaust gas discharged from a flameproofing step in which the fibrous substance is flameproofed in an air atmosphere and a first combusting step-exhaust gas discharged from the first combustion step are treated;
in the first combusting step, the carbonizing step-exhaust gas is combusted at a low oxygen ratio of 0.8 or less by a fuel and an oxygen-enriched air;
in the second combusting step, the first combusting step-exhaust gas and the flameproofing step-exhaust gas are combusted by using heat of the first combusting step-exhaust gas; and
nitrogen for producing the inert gas atmosphere in the carbonizing step, and the oxygen-enriched air used in the first combusting step are produced by separating air.

The combustion of the first combusting step-exhaust gas and the flameproofing step-exhaust gas may be promoted by supplying a fuel in the second combusting step.

Viewed from a third aspect, there is provided a carbon manufacturing equipment according to claim 3,

Viewed from a fourth aspect, there is provided a carbon fiber manufacturing method according to claim 6.

### EFFECTS OF PRESENT INVENTION

According to the present invention, it is possible to provide an exhaust gas treatment method which prevents the generation of NOx, and treats the flameproofing step-exhaust gas and the carbonizing step-exhaust gas with a small amount of fuel, and an exhaust gas treatment device which can treat the flameproofing step-exhaust gas and the carbonizing step-exhaust gas with a small amount of fuel. In addition, according to the present invention, it is also possible to suppress a cost increase due to an increase in an amount of gas treated by using the oxygen-enriched air, which is produced after separating nitrogen for producing the inert gas atmosphere in the carbonizing step, as an oxygen source for combusting the carbonizing step-exhaust gas.

### BRIEF DESCRIPTION OF THE DRAWINGS

[Figure 1] Figure 1 is a view showing an exhaust gas treatment device in a carbon fiber manufacturing method of one embodiment according to the present invention.
[Figure 2] Figure 2 is a view showing another exhaust gas treatment device in a carbon fiber manufacturing method of one embodiment according to the present invention.
[Figure 3] Figure 3 is a view showing a carbon fiber manufacturing equipment of one embodiment according to the present invention.
[Figure 4] Figure 4 is a graph showing a relationship between a concentration of NH₃ and NOx and an oxygen ratio which are discharged from the exhaust gas treatment device.
[Figure 5] Figure 5 is a graph showing decomposition behavior of HCN and formation and decomposition behavior of NO obtained by reaction analysis.
[Figure 6] Figure 6 is a graph showing decomposition behavior of NO obtained by reaction analysis when NO is added.

### BRIEF DESCRIPTION OF THE DRAWINGS

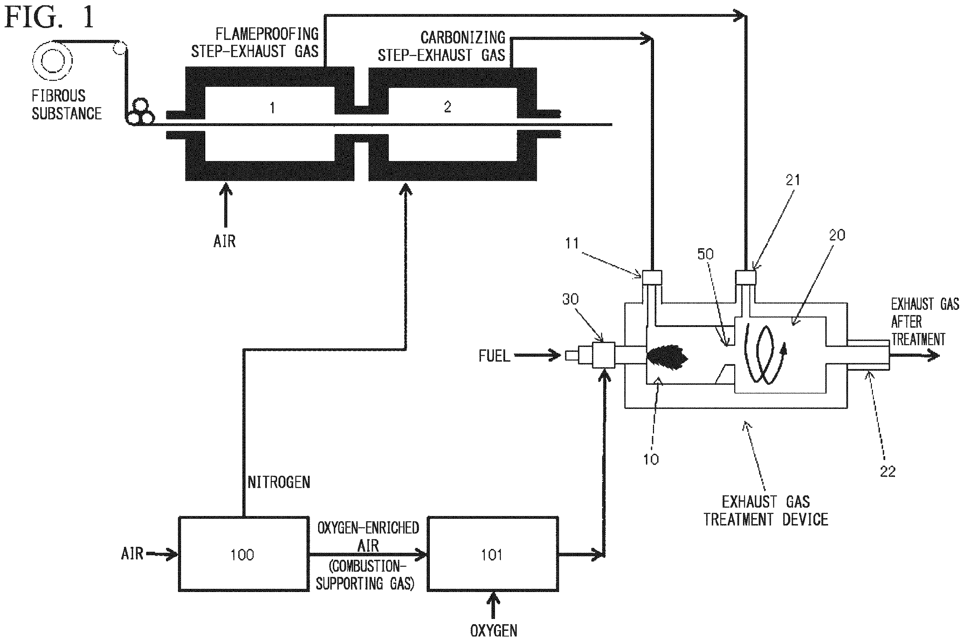

[Figure 1] Figure 1 is a view showing an exhaust gas treatment device in a carbon fiber manufacturing method of one embodiment according to the present invention.

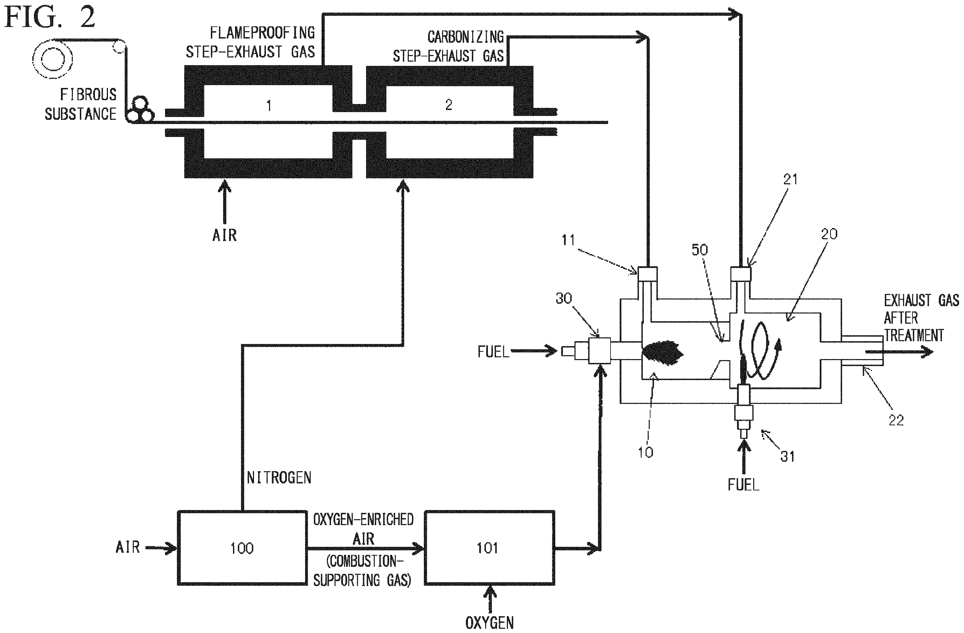

[Figure 2] Figure 2 is a view showing another exhaust gas treatment device in a carbon fiber manufacturing method of one embodiment according to the present invention.

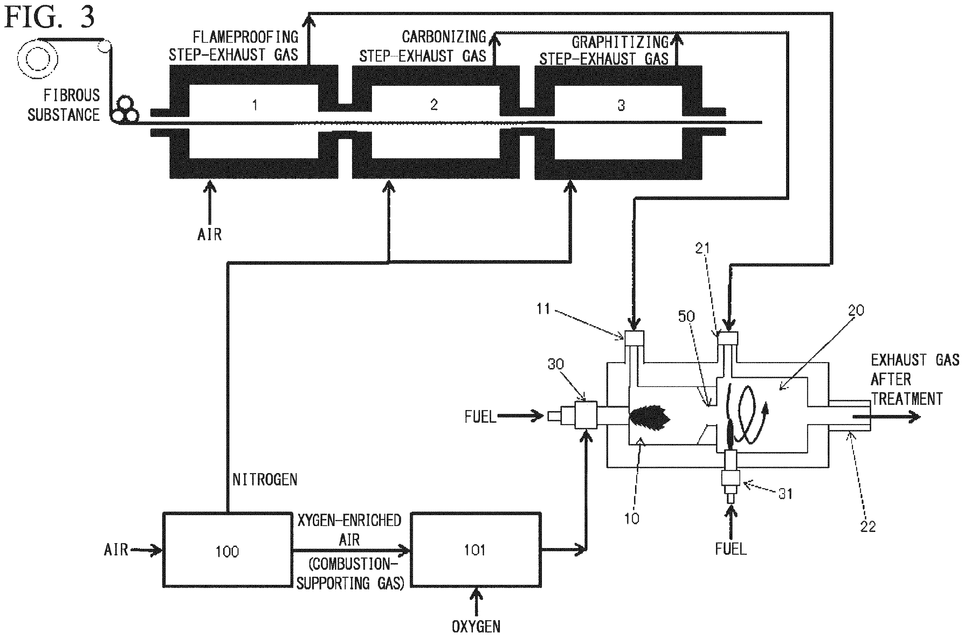

[Figure 3] Figure 3 is a view showing a carbon fiber manufacturing equipment of one embodiment according to the present invention.

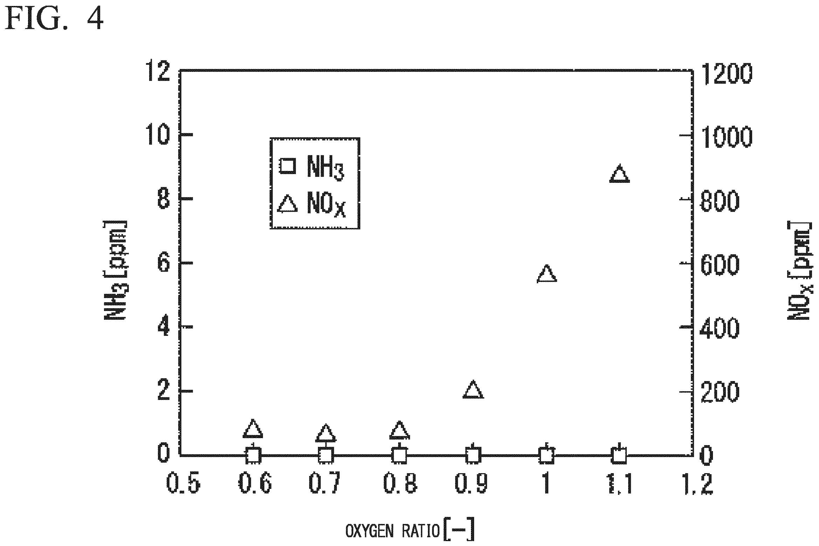

[Figure 4] Figure 4 is a graph showing a relationship between a concentration of NH₃ and NOx and an oxygen ratio which are discharged from the exhaust gas treatment device.

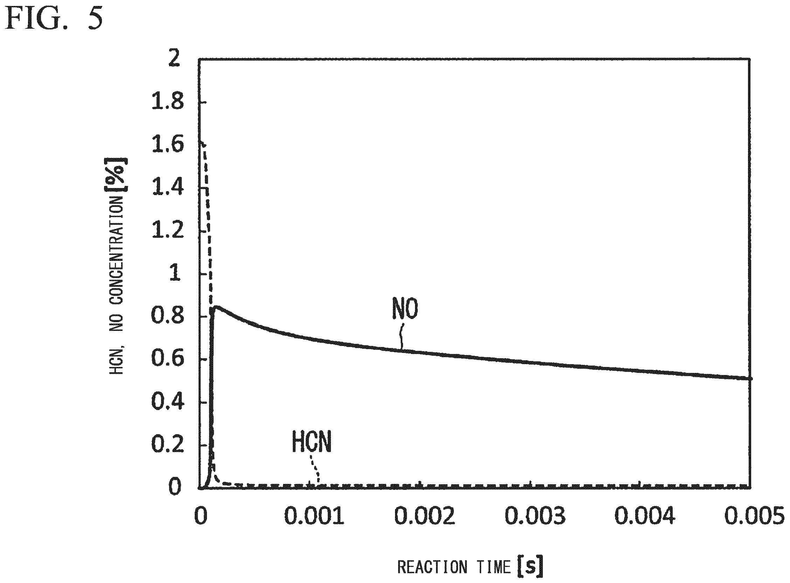

[Figure 5] Figure 5 is a graph showing decomposition behavior of HCN and formation and decomposition behavior of NO obtained by reaction analysis.

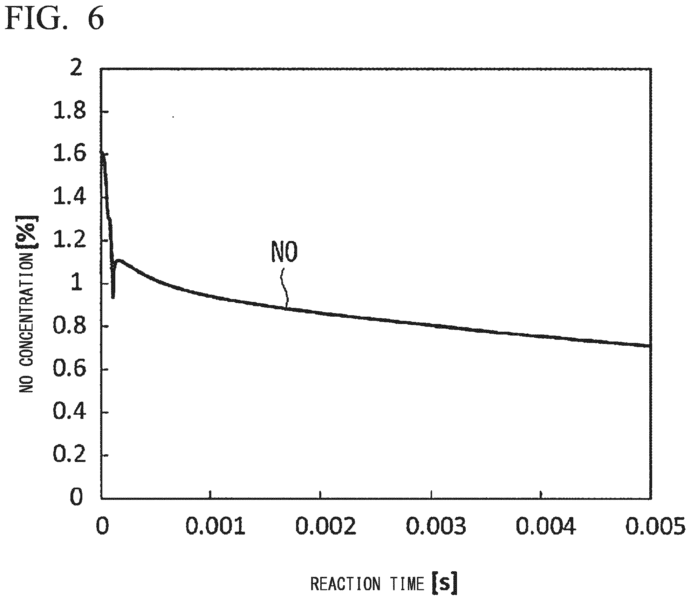

[Figure 6] Figure 6 is a graph showing decomposition behavior of NO obtained by reaction analysis when NO is added.

### EMBODIMENTS OF THE INVENTION

Below, embodiments of an exhaust gas treatment method in a carbon fiber manufacturing method will be explained in detail using figures together with an exhaust gas treatment device. Moreover, in order to easily understand characteristics, the characteristics may be enlarged as a matter of convenience, size ratio of each components may not be the same as that of an actual component in figures used in the following explanations.

### <First Embodiment>

### (Exhaust gas treatment device)

First embodiment of an exhaust gas treatment device according to the present invention is explained. Figure 1 is a view showing a carbon fiber manufacturing equipment including an exhaust gas treatment device of the first embodiment according to the present invention.

As shown in Figure 1, the exhaust gas treatment device of the first embodiment mainly includes a first combustion furnace 10, a carbonizing step-exhaust gas inlet 11, a first burner 30, a throttle portion 50, a second combustion furnace 20, a flameproofing step-exhaust gas inlet 21, and an exhaust port 22.

By using the exhaust gas treatment device according to this embodiment, an exhaust gas treatment method which is explained below can be carried out. Specifically, a carbonizing step-exhaust gas which is discharged from the carbonizing furnace 2 is treated in the first combustion furnace 10, and a flameproofing step-exhaust gas which is discharged from the flameproofing furnace 1 is treated in the second combustion furnace 20.

The first combustion furnace 10 is a tubular (for example, cylindrical) furnace which decomposes harmful gasses such as hydrogen cyanide, and ammonia, contained in the carbonizing step-exhaust gas by combusting the carbonizing step-exhaust gas. Material for the first combustion furnace 10 is not particularly limited, and examples of the material include an alumina refractory material, and an alumina-silica refractory material.

The first combustion furnace 10 is provided with the first burner 30, a first thermometer (not shown in figures), and the carbonizing step-exhaust gas inlet 11.

The first burner 30 is arranged at the end part of the first combustion furnace 10 so as to be coaxial with the first combustion furnace 10. The first burner 30 produces flam in the internal space of the first combustion furnace 10 by a fuel and a combustion-supporting gas. The carbonizing step-exhaust gas inlet 11 is provided in the side wall of the first combustion furnace 10 in proximity to the first burner 30. The carbonizing step-exhaust gas introduced into the first combustion furnace 10 can be burned by the flame of the first burner 30.

The combustion-supporting gas supplied to the first burner 30 contains a part of oxygen-enriched air after nitrogen is separated in an air separation device 100 for producing nitrogen to be supplied to the carbonizing furnace 2.

By adjusting the flow rates of the fuel and the oxygen-enriched air, it is possible to control a combustion amount and an oxygen ratio, which will be described later. By controlling the oxygen ratio, it is possible to form a flame in a reducing atmosphere for efficiently combusting the carbonizing step-exhaust gas.

Material for the fuel is not particularly limited, but preferable examples of the fuel include gas fuel, such as city gas, and LPG, and liquid fuel, such as kerosene, and a heavy oil.

From the viewpoint of improving a decomposition rate, when it is desired to use a gas having a high oxygen concentration, the oxygen concentration may be adjusted by adding pure oxygen in the combustion-supporting gas conditioning equipment 101 and the gas may be supplied to the first burner 30.

When the oxygen concentration is high, the temperature in the first combustion furnace 10 can be raised, and the decomposition speed can be increased. As a result, the residence time of the carbonizing step-exhaust gas in the combustion furnace can be shortened, so that the first combustion furnace 10 can be reduced in size.

The exhaust gas treatment device is provided with a control unit (not shown in figures) which controls a combustion amount of the first burner 30 based on the temperature in the first combustion furnace 10 and the temperature of second combustion furnace 20.

FIG. 1 shows a case in which the carbonizing step-exhaust gas inlet 11 is provided with the first combustion furnace 10. However, the carbonizing step-exhaust gas inlet may be provided with the first burner 30. Thereby, the first burner 30 produces flame in an inert atmosphere in the first combustion furnace 10, and supplies the carbonizing step-exhaust gas into the first combustion furnace 10.

The second combustion furnace 20 is provided at the post-stage of the first combustion furnace 10. The second combustion furnace 20 is a tubular (for example, cylindrical) furnace which decomposes harmful gasses such as hydrogen cyanide, and ammonia, contained in the flameproofing step-exhaust gas by combusting the flameproofing step-exhaust gas. Material for the second combustion furnace 20 is not particularly limited, but examples of the material include alumina refractory material, and alumina-silica refractory material, similar to the first combustion furnace 10.

The first combustion furnace 10 and the second combustion furnace 20 communicate with each other via the throttle portion 50. The throttle portion 50 can prevent the combustion gas in the second combustion furnace 20 from entering the first combustion furnace 10 and maintain the interior of the first combustion furnace 10 in a reducing atmosphere.

The exhaust gas after combusting the carbonizing step-exhaust gas in the first combustion furnace 10 is supplied into the second combustion furnace 20 via the throttle portion 50 (hereinafter, the carbonizing step-exhaust gas after being combusted in the first combustion furnace 10 is defined as "first combusting step-exhaust gas").

In the second combustion furnace 20, the heat of the first combusting step-exhaust gas can be used to combust the flameproofing step-exhaust gas, and harmful gas such as hydrogen cyanide contained in the flameproofing step-exhaust gas can be combusted and decomposed.

The second combustion furnace 20 is provided with a flameproofing step-exhaust gas inlet 21 and an exhaust port 22.

The flameproofing step-exhaust gas inlet 21 is provided with the side wall of the second combustion furnace 20 on the side of the throttle portion 50. The flameproofing step-exhaust gas can be supplied into the second combustion furnace 20 from the flameproofing step-exhaust gas inlet 21. The flameproofing step-exhaust gas inlet 21 is provided so that the flameproofing step-exhaust gas can be blown in the tangential direction of the side wall of the second combustion furnace 20. As a result, it is possible to form a swirling flow by the flameproofing step-exhaust gas in the second furnace 20. The flameproofing step-exhaust gas in the swirling flow involves the first combusting step-exhaust gas introduced from the throttle portion 50, and efficiently combusts and decomposes the harmful gas contained in the flameproofing step-exhaust gas.

Moreover, as shown in FIG. 2, the second burner 31 may be provided at a position on the side wall of the second combustion furnace 20 opposite to the flameproofing step-exhaust gas inlet 21. It is possible to finely adjust the temperature in the second combustion furnace 20 by supplying the fuel to the second burner.

It is possible to discharge the gas combusted in the second combustion furnace 20 from the exhaust port 22 provided at the end wall of the second combustion furnace 20 which is opposite to the throttle portion 50.

### (Exhaust Gas Treatment Method)

Below, the exhaust gas treatment method in the carbon fiber manufacturing equipment using the exhaust gas treatment device will be explained.

In the carbon fiber manufacturing system in the present embodiment includes a flameproofing step in which the fibrous substance is subjected to a flameproofing treatment at 200 to 300°C in an air atmosphere in the flameproofing furnace 1, and a carbonizing step in which a carbonizing treatment is carried out at 300 to 2,000°C in an inert gas atmosphere in the carbonizing furnace 2 provided at the post-stage of the flameproofing furnace 1.

In order to be an inert gas atmosphere in the carbonizing furnace 2, nitrogen is separated from air using the air separation device 100, and the nitrogen is supplied into the carbonizing furnace 2.

The carbonizing step-exhaust gas generated in the carbonizing furnace 2 is subjected to a first combusting step in the first combustion furnace 10. The flameproofing step-exhaust gas generated in the flameproofing furnace 1 is subjected to a second combusting step in the second combustion furnace 20.

The first combusting step is a combustion step in which the carbonizing step-exhaust gas is combusted at a low oxygen ratio, an oxygen ratio of 0.8 or less. Specifically, in the first combusting step, the exhaust gas (carbonizing step-exhaust gas) which is generated in the carbonizing step in the carbonizing furnace 2 and based on nitrogen gas containing hydrogen cyanide, ammonia, etc. at high concentrations is supplied into the first combustion furnace 10 through the carbonizing step-exhaust gas inlet 11. A fuel and a combustion-supporting gas are combusted in a temperature range from 1,000 to 1,600°C by the first burner 30 provided in the first combustion furnace 10, and a flame is produced.

The combustion-supporting gas supplied to the first burner 30 is an oxygen-enriched air after separating nitrogen from raw air in the air separation device 100. The carbonizing step-exhaust gas is combusted in the first combustion furnace 10 by the flame produced by the first burner 30 using the oxygen-enriched air and the fuel.

At this time, the carbonizing step-exhaust gas may be supplied from the first burner 30 into the first combustion furnace 10.

The temperature inside of the first combustion furnace 10 is measured by the first thermometer (not shown in figures). The temperature inside of the second combustion furnace 20 is measured by a second thermometer (not shown in figures). Based on the temperatures measured, the control unit (not shown in figures) adjusts the combustion temperature by controlling the combustion amount of the first burner 30. The combustion amount can be controlled by adjusting the amount of the fuel gas and the combustion-supporting gas supplied.

Moreover, "combustion amount" is an amount of heat generated per unit time caused by combusting a fuel. As the combustion amount increases, the amount of heat generated per unit time increases, so that the temperature of the furnace increases.

Since the carbonizing step-exhaust gas to be treated in the first combustion furnace 10 is a nitrogen-based exhaust gas containing hydrogen cyanide, ammonia, and the like at a high concentration, when the combustion treatment is carried out under conditions in which the oxygen ration is higher than the stoichiometric ratio (oxygen ratio is higher than 0.8), a large amount of NOₓ is produced. Therefore, in the first combustion furnace 10, treatment is carried out while forming a reducing atmosphere under combustion conditions with an oxygen ratio of 0.8 or less.

Thereby, it is possible to carry out combustion and decomposition while suppressing the generation of NOₓ. Therefore, in the exhaust gas treatment method of this embodiment, the oxygen ratio is controlled to 0.8 or less by decreasing the ratio of oxygen contained in the combustion-supporting gas with respect to the fuel gas.

Moreover, the "oxygen ratio" is a value obtained by dividing the oxygen amount supplied to the burner by the theoretical oxygen amount required for combusting the fuel supplied to the burner. Therefore, theoretically, it can be said that the state where the oxygen ratio is 1.0 is a state in which complete combustion can be carried out using excessive or insufficient oxygen.

As explained above, the harmful gas such as hydrogen cyanide, ammonia and the like contained in the carbonizing step-exhaust gas is combusted and decomposed in the first combustion furnace 10. The first combusting step-exhaust gas generated by combustion is supplied into the second combustion furnace 20 via the throttle portion 50.

The second combusting step is a combustion step in which the first combustion step-exhaust gas discharged in the first combusting step and the flameproofing step-exhaust gas are combusted using the heat of the first combustion step-exhaust gas.

Incidentally, the flameproofing step-exhaust gas is an air-based exhaust gas containing hydrogen cyanide and ammonia, and has a much larger discharge amount than that of the carbonizing step-exhaust gas. Therefore, when the oxygen ratio is reduced to 0.8 or less and the combustion decomposition is attempted in the same way as the carbonizing step-exhaust gas, it is necessary to use a large amount of fuel.

In addition, hydrogen cyanide and ammonia can be decomposed while suppressing generation of NOx by performing combustion treatment at a low temperature even in an atmosphere in which oxygen exists.

Therefore, in the exhaust gas treatment method of the present embodiment, hydrogen cyanide and ammonia are decomposed while suppressing generation of NOx by combusting the flameproofing step-exhaust gas in the temperature range of 700 to 1,200°C.

Firstly, the first combusting step-exhaust gas supplied from the first combustion furnace 10 through the throttle portion 50 is mixed with the flameproofing step-exhaust gas supplied from the flameproofing step-exhaust gas inlet 21 provided in the second combustion furnace 20. For example, the flameproofing step-exhaust gas is introduced from the side wall of the cylindrical second combustion furnace 20 in the tangential direction of the side wall. The flameproofing step-exhaust gas introduced in this way forms a swirling flow while involving the first combusting step-exhaust gas. Thereby, the first combusting step-exhaust gas and the flameproofing step-exhaust gas can be sufficiently mixed. In addition, the residence time in the second combustion furnace can be increased by making the swirling flow with the flameproofing step-exhaust gas.

When flameproofing step-exhaust gas and the first combusting step-exhaust gas are mixed in the second combustion furnace 20, the gas such as CO or H₂ contained in the first combusting step-exhaust gas and the oxygen contained in the flameproofing step-exhaust gas are combusted. By both the heat generated by the combustion and the heat of the first combusting step-exhaust gas, the temperature inside the second combustion furnace 20 can be raised to 700°C or higher. When the temperature in the second combustion furnace 20 reaches 700°C or higher, the harmful gas such as hydrogen cyanide contained in the flameproofing step-exhaust gas is combusted and decomposed. Thus, in the second combusting step, the heat of the first combusting step-exhaust gas discharged in the first combusting step is effectively utilized.

When the amount of heat for effectively carried out the second combusting step is insufficient, for example, it is possible to provide a second burner 31 to the second combustion furnace 20, supply the fuel, and increase the temperature.

In addition, it is also possible to stably combust the flameproofing step-exhaust gas and the first combusting step-exhaust gas by providing the second burner 31 to the inside wall of the second combustion furnace 30. The combustion amount can be controlled by supplying the fuel to the second burner 31 and adjusting the flow rate of the fuel supplied to the second burner 31. It is also possible to control the combustion conditions by supplying the fuel and the combustion-supporting gas to the second burner 31. The second burner 31 does not need to be constantly burned, and it may be ignited when the internal temperature of the second combustion furnace 20 becomes lower than the predetermined temperature.

The temperature inside the second combustion furnace 20 is measured by the second thermometer (not shown in figures). By controlling the oxygen ratio of the first burner 30 by the control unit (not shown in figures) based on the measured temperature, the amount of uncombusted gas flowing into the second combustion furnace 20 is controlled. Thus, the temperature in the second combustion furnace 20 can be controlled.

Next, the exhaust gas generated by combustion in the second combustion furnace 20 is exhausted to the outside from the exhaust port 22, thereby completing the exhaust gas treatment method of the present embodiment.

As described above, the carbon fiber manufacturing equipment including the exhaust gas treatment device of the present embodiment includes the flameproofing furnace 1 for subjecting the fibrous substance to the flameproofing treatment in an air atmosphere, the carbonizing furnace 2 for subjecting the fibrous substance after the flameproofing treatment to the carbonizing treatment in an inert gas atmosphere, the air separation device 100 for separating nitrogen, which is supplied into the carbonizing furnace 2, from air, the first combustion furnace 10 for treating the carbonizing step-exhaust gas generated in the carbonizing furnace 2, the first burner 30 which is provided in the first combustion furnace 10 and combusts the oxygen-enriched air from the air separation device 100 and the fuel, and the second combustion furnace 20 for treating the flameproofing step-exhaust gas generated in the flameproofing furnace, and the second combustion furnace 20 is provided at the post-stage of the first combustion furnace 10, the first combustion furnace 10 and the second combustion furnace 20 communicate with each other via the throttle portion 50, the first combusting step-exhaust gas after combustion in the first combustion furnace 10 can be supplied into the first combustion furnace 20. The flameproofing step-exhaust gas inlet 21 is provided in the second combustion furnace 20 so that the flameproofing step-exhaust gas can be blown in the tangential direction of the side wall of the second combustion furnace 20. The flameproofing step-exhaust gas forms the swirling flow in the second combustion furnace 20. Thereby, the flameproofing step-exhaust gas is combusted by mixing with the first combusting step-exhaust gas supplied from the throttle portion 50 into the second combustion furnace.

In the second combustion furnace 20, since the heat of the first combusting step-exhaust gas can be used, the flameproofing step-exhaust gas can be efficiently combusted. As a result, the amount of the fuel used to treat the carbonizing step-exhaust gas and the flameproofing step-exhaust gas can be reduced. In addition, since the carbonizing step-exhaust gas and the flameproofing step-exhaust gas can be treated by one device, the equipment cost and the maintenance cost can be reduced.

In addition, since the second combustion furnace 20 is communicated with the first combustion furnace 10 through the throttle portion 50 in the exhaust gas treatment device 1 of the present embodiment, it is possible to prevent the gas including oxygen in the second combustion furnace 20 from entering into the first combustion furnace 10, and maintain the inside of the first combustion furnace 10 in the reducing atmosphere.

In addition, according to the exhaust gas treatment method of this embodiment, since the nitrogen gas which is used in the carbonizing step in an inert gas atmosphere is produced by the air separation device 100, the remaining oxygen-enriched air after separation of nitrogen from the air is used as the combustion-supporting gas in the first combusting step, it is possible to suppress the cost increase due to upsizing of the carbon fiber manufacturing equipment.

In addition, since the carbonizing step-exhaust gas is combusted at a low oxygen ratio having an oxygen ratio of 0.8 or less in the first combusting step, the carbonizing step-exhaust gas can be treated while suppressing generation of NOₓ.

Further, according to the exhaust gas treatment method of this embodiment, since the second combusting step in which the first combustion step-exhaust gas and the flameproofing step-exhaust gas are combusted is carried out by using the heat of the first combusting step-exhaust gas discharged from the first combusting step in which the carbonizing step-exhaust gas is treated, the amount of the fuel used in the burner can be reduced. In addition, since the carbonizing step-exhaust gas and the flameproofing step-exhaust gas can be treated in continuous steps, the equipment cost and the maintenance cost can be reduced.

### <Second Embodiment>

Next, a carbon fiber manufacturing equipment of a second embodiment according to the present invention will be described. FIG. 3 is a view showing a carbon fiber manufacturing equipment of a second embodiment according to the present invention. Here, a description will be given focusing on parts different from the first embodiment.

As shown in FIG. 3, the carbon fiber manufacturing equipment of this embodiment is different from the first embodiment in that the graphitizing furnace 3 is provided at the post-stage of the carbonization furnace 2.

In the graphitizing furnace 3, carbon fiber having high elasticity can be obtained by heating the carbonized fibrous substance in an inert gas atmosphere at 2,000° C to 3,000° C. As in the carbonizing treatment, the graphitizing treatment is performed in an inert gas atmosphere, so that a part of the nitrogen produced by the air separation device 100 is also introduced into the graphitizing furnace 3.

A graphitizing step-exhaust gas is a nitrogen-based gas containing hydrogen cyanide, ammonia and the like at high concentrations. Therefore, the graphitizing step-exhaust gas can be treated in the first combustion furnace 10 together with the carbonizing step-exhaust gas. The graphitizing step-exhaust gas may be introduced into the first combustion furnace 10 after mixing with the carbonizing step-exhaust gas, or may be separately introduced. FIG. 3 shows a case in which these gases are introduced from the graphitizing step-exhaust gas inlet 11 after mixing the graphitizing step-exhaust gas and the carbonizing step-exhaust gas in a buffer tank (not shown) or the like.

The technical scope of the present invention is not limited to the above embodiments, and various modifications can be made without departing from the scope of the present invention.

For example, in the exhaust gas treatment device of the above-described embodiment, the exhaust gas combusted in the second combustion furnace 20 is discharged to the outside through the exhaust port 22. However, a heat exchanger may be connected to the exhaust port 22, the exhaust gas introduced into each combustion furnace may be preheated by utilizing the heat of the post-treatment exhaust gas discharged from the exhaust port 22. Thereby, it possible to lower the combustion amount of the burner of each combustion furnace, and reduce the amount of fuel used.

### <Example 1>

### (Comparison with Direct-Combustion Method)

Using the exhaust gas treatment device shown in FIG. 1 and a conventional direct-combustion type exhaust gas treatment device of the prior art, treatment tests were carried out using simulated gas of the carbonizing step-exhaust gas discharged from the carbonizing furnace, the graphitizing step-exhaust gas discharged from the graphitizing furnace, and the flameproofing step-exhaust gas discharged from the flameproofing furnace.

Table 1 shows the composition and flow rate of the simulated gas (here, it is denoted by simulated gas A) of the carbonizing step-exhaust gas and the graphitizing step-exhaust gas, and the simulated gas (here, it is denoted by simulated gas B) of the flameproofing step-exhaust gas. For simulated gas, NO was used as an alternative to HCN (the validity of using NO as a simulated gas will be described later). In this treatment test, simulated gas was treated under three conditions (Conditions 1-1, 1-2, and 1-3).

Table 2 shows the combustion conditions of the burner of the exhaust gas treatment device and the direct-combustion type exhaust gas treatment device as a comparative example.

In this example, oxygen-enriched air having an oxygen concentration of 40% was used as the combustion-supporting gas and combusted at an oxygen ratio of 0.7 in the first burner 30. The temperature of the first combustion furnace 10 was 1,600°C and the temperature of the second combustion furnace 20 was 1000°C.

In the direct-combusting type treatment device, treatment was carried out at 1,000°C.

**[Table 1]**

| | | Condition 1-1 | Condition 1-2 | Condition 1-3 |
|---|---|---|---|---|
| Simulated gas A | NO concentration [vol%] | 5 | 2.5 | 1 |
| | NH₃ concentration [vol%] | 5 | 2.5 | 1 |
| | Base gas | Nitropen | Nitrogen | Nitrogen |
| | Flow rate [Nm³/h] | 1 | 1 | 1 |
| Simulated gas B | NO concentration [vol%] | 0 | 0 | |
| | NH₃ concentration [vol%] | 0.01 | 0.01 | 0.01 |
| | Base gas | Air | Air | Air |
| | Flow rate [Nm³/h] | 10 | 10 | 10 |

**[Table 2]**

| | Exhaust gas treatment device shown in FIG. 1 | Direct-combustion type exhaust gas treatment device |
|---|---|---|
| Flow rate of city gas [Nm³/h] | 1.3 | 3 |
| Flow rate of combustion-supporting gas [Nm³/h] | 5.3 | - |
| Flow rate of air [Nm³/h] | - | 33 |
| Oxygen concentration of combustion-supporting gas [vol%] | 40 | 20.8 |

Table 3 shows the treatment test results. In the table, the results of the exhaust gas treatment device shown in FIG. 1 are represented as Inventions 1 to 3, and the results of the direct-fire type exhaust gas treatment device are shown as Comparative Examples 1 to 3.

From these results, it was confirmed that ammonia (NH₃) is decomposed to an extremely low concentration, and the generation of NOx is suppressed to about 90 ppm in the exhaust gas treatment device shown in FIG. 1 even under the condition 1-1 in which NO and NH₃ are added at the highest concentration.

On the other hand, it was confirmed that when NO and NH₃ are decomposed, the NOx concentration increases in the direct-combustion type exhaust gas treatment system.

Further, it was also confirmed that the carbonizing step-exhaust gas, the graphitizing step-exhaust gas, and the flameproofing step-exhaust gas are treated with fewer fuel in the exhaust gas treatment device shown in FIG. 1 than the direct-combustion type exhaust gas treatment device.

**[Table 3]**

| | Condition 1-1 | | Condition 1-2 | | Condition 1-3 | |
|---|---|---|---|---|---|---|
| | Present Invention 1 | Comparative Example 1 | Present Invention 2 | Comparative Example 2 | Present Invention 3 | Comparative Example 3 |
| NH₃ concentration [ppm] | 0 | 5 | 0 | 3 | 0 | 0 |
| NOx concentration [ppm] | 90 | 1210 | 75 | 730 | 58 | 350 |

### <Example 2>

### (Effect of Oxygen Ratio)

Using the same exhaust gas treatment device shown in FIG. 1 similar to Example 1, the concentration of NH₃ and NOx contained in the exhaust gas after treating the simulated gas A and the simulated gas B under the condition 1-2 of Table 3 were measured by changing the oxygen ratio of the first burner 30 as shown in Table 4.

**[Table 4]**

| | Condition 2-1 | Condition 2-2 | Condition 2-3 | Condition 2-4 | Condition 2-5 | Condition 2-6 |
|---|---|---|---|---|---|---|
| Flow rate of city gas [Nm³/h] | 1.3 | 1.3 | 1.3 | 1.3 | 1.3 | 1.3 |
| Flow rate of combustion-supporting gas [Nm³/h] | 1.8 | 2.1 | 2.4 | 2.7 | 3.0 | 3.3 |
| Oxygen ratio [-] | 0.6 | 0.7 | 0.8 | 0.9 | 1.0 | 1.1 |
| Oxygen concentration of combustion-supporting gas [vol%] | 30 | 30 | 30 | 30 | 30 | 30 |

FIG. 4 shows the relationship between the concentration of NH₃ and NOx in the exhaust gas after treating discharged from the exhaust port 22 of the exhaust gas treatment device and the oxygen ratio.

From these results, it was confirmed that NH₃ is less than 0.1 ppm under all conditions, and almost all can be decomposed.

Further, when the oxygen ratio of the first burner 30 is set to be larger than 0.8, the NOx tends to rapidly increase. It was confirmed that the simulated gas A is treated while suppressing the generation of NOx by setting the oxygen ratio to 0.8 or less.

### <Example 3>

### (Test on Pilot Equipment)

Using the exhaust gas treatment device shown in FIG. 1 as a pilot equipment, exhaust gas treatment was performed.

Table 5 shows the composition and flow rate of the simulated gas A of the carbonizing step-exhaust gas and the graphitizing step-exhaust gas, and the simulated gas B of the flameproofing step-exhaust gas. The flow rate of the simulated gas B was adjusted to 300, 600, and 900 Nm³/h (conditions 3-1, 3-2, and 3-3). Table 6 also shows the burner combustion conditions under each exhaust gas condition.

**[Table 5]**

| | | Condition 3-1 | Condition 3-2 | Condition 3-3 |
|---|---|---|---|---|
| Simulated gas A | NO concentration [vol%] | 5 | 5 | 5 |
| | NH₃ concentration [vol%] | 5 | 5 | 5 |
| | Base gas | Nitrogen | Nitrogen | Nitrogen |
| | Flow rate [Nm³/h] | 30 | 30 | 30 |
| Simulated gas B | NO concentration [vol%]0 | 0 | 0 | 0 |
| | NH₃ concentration [vol%] | 0.01 | 0.01 | 0.01 |
| | Base gas | Air | Air | Air |
| | Flow rate [Nm³/h] | 300 | 600 | 900 |

**[Table 6]**

| | Condition 3-1 | Condition 3-2 | Condition 3-3 |
|---|---|---|---|
| Flow rate of city gas [Nm³/h] | 15 | 23 | 31 |
| Flow rate of combustion-supporting gas [Nm³/h] | 10 | 15 | 20 |
| Flow rate of air [Nm³/h] | 73 | 112 | 150 |
| Oxygen concentration of combustion-supporting gas [vol%] | 30 | 30 | 30 |

Table 7 shows the concentrations of NH₃ and NO x in the exhaust gas after treating discharged from the exhaust port 22 of the exhaust gas treatment device. From these results, it was confirmed that the exhaust gas treatment device shown in FIG. 1 decomposes NH₃ to an extremely low concentration, and furthermore, it is possible to suppress generation of NOx accompanying combustion.

**[Table 7]**

| | Condition 3-1 | Condition 3-2 | Condition 3-3 |
|---|---|---|---|
| NH₃ concentration [ppm] | 0.8 | 0.6 | 0.5 |
| NOx concentration [ppm] | 55 | 38 | 25 |

### <Example 4>

### (Validation of Using Simulated Gas)

NO was used as an alternative simulated gas for HCN. The validity of using NO as simulated gas was studied by reaction analysis in the simulation.

Reaction analysis was performed using CHEMKIN-PRO (Reaction Design, detailed chemical reaction analysis support software). The analysis conditions are shown in Table 8. Condition 4-1 is a case where HCN is added to the first combustion furnace 10 under a reducing atmosphere and condition 4-2 is a case where NO is added.

**[Table 8]**

| | | Condition 4-1 | Condition 4-2 |
|---|---|---|---|
| Fuel CH₄ [mol] | | 1.0 | 1.0 |
| Oxygen O₂ [mol] | | 1.6 | 1.6 |
| Gas to be treated [mol] | HCN | 0.1 | - |
| | NO | - | 0.1 |
| | N₂ | 0.9 | 0.9 |
| Reaction temperature [°C] | | 1500 | 1500 |

FIG. 5 shows the decomposition behavior of HCN and the generation/decomposition behavior of NO by the reaction analysis under Condition 4-1. In addition, FIG. 6 shows the NO decomposition behavior by the reaction analysis when NO is added under Condition 4-2.

It is understood from FIG. 5 that HCN is rapidly decomposed in a reducing combustion atmosphere, and NOx is rapidly generated due to the decomposition of HCN, and then NOx generated is gradually decomposed. Comparing the change in NO concentration in Figs. 5 and 6, the decomposition behavior shows the same trend, and it is possible to evaluate the decomposition behavior of NO generated along with decomposition of HCN by using NO as the simulation gas.

### <Example 5>

In the carbon fiber manufacturing equipment shown in FIG. 2, nitrogen which was separated from a raw air by the air separation device is introduced into the carbonizing furnace and the remaining oxygen enriched-air after separation of the nitrogen from the raw air was used as the combustion-supporting gas for combusting the carbonizing step-exhaust gas.

**[Table 9]**

| | Air separation device | Carbonizing furnace | Flameproofing furnace | First combustion furnace | Second combustion furnace |
|---|---|---|---|---|---|
| Flow rate of raw air [Nm³/h] | 11,300 to 34,000 | - | - | - | - |
| Flow rate of nitrogen introduced into carbonizing furnace [Nm³/h] | 5,000 to 15,000 | - | - | - | - |
| Flow rate of carbonizing step-exhaust gas [Nm³/h] | - | 5,000 to 15,000 | | | |
| Flow rate of flameproofing step-exhaust gas | - | | 15,000 to 410,000 | | |
| Concentration of oxygen in oxygen-enriched air introduced into first combustion furnace [vol%] | - | | | 40 | |
| Flor rate of oxygen-enriched air introduced into first combustion furnace [Nm³/h] | - | | | 1,100 to 3,300 | |
| Flow rate of city gas introduced into first burner [Nm³/h] | - | | | 108 to 300 | |
| Flow rate of city gas introduced into second burner [Nm³/h] | - | | | | 0 to 3,800 |

In this example, city gas and oxygen-enriched air having an oxygen concentration of 40% were combusted at an oxygen ratio of 0.65 in the first burner 30. The temperature of the first combustion furnace 10 was 1,600°C and the temperature of the second combustion furnace 20 was 1000°C.

### <Example 6>

In the carbon fiber manufacturing equipment shown in FIG. 3, nitrogen which was separated from a raw air by the air separation device is introduced into the carbonizing furnace and the graphitizing furnace, and the remaining oxygen enriched-air after separation of the nitrogen from the raw air was used as the combustion-supporting gas for combusting the carbonizing step-exhaust gas and graphitizing step-exhaust gas.

**[Table 10]**

| | Air separation device | Carbonizing furnace | Flameproofing furnace | First combustion furnace | Second combustion furnace |
|---|---|---|---|---|---|
| Flow rate of raw air [Nm³/h] | 8,800 to 11,400 | - | - | - | - |
| Flow rate of nitrogen introduced into carbonizing furnace and graphitizing furnace [Nm³/h] | 3,000 to 5,000 | - | - | - | - |
| Flow rate of carbonizing step-exhaust gas and graphitizing step-exhaust gas [Nm³/h] | - | 3,000 to 5,000 | | | |
| Flow rate of flameproofing step-exhaust gas [Nm³/h] | - | | 9,500 to 270,000 | | |
| Concentration of oxygen in oxygen-enriched air introduced into first combustion furnace [ vol%] | - | | | 40 | |
| Flor rate of oxygen-enriched air introduced into first combustion furnace [Nm³/h] | - | | | 640 to 1,050 | |
| Flow rate of city gas introduced into first burner [Nm³/h] | - | | | 45 to 75 | |
| Flow rate of city gas introduced into second burner [Nm³/h] | - | | | | 32 to 1,750 |

### INDUSTRIAL APPLICABILITY

The exhaust gas treatment method and the exhaust gas treatment device of the present invention can be used as a method and a device for treating exhaust gas containing hydrogen cyanide, ammonia and the like.

In particular, it is possible to suppress the generation of NOx and treat the flameproofing step-exhaust gas and the carbonizing step-exhaust gas in carbon fiber manufacturing with a small amount of fuel, and suppress the cost increase due to an increase in an amount of gas treated.

### DESCRIPTION OF REFERENCE NUMERALS

- 1: flameproofing furnace
- 2: carbonizing furnace
- 3: graphitizing furnace
- 10: first combustion furnace
- 11: carbonizing step-exhaust gas inlet
- 20: second combustion furnace
- 21: flameproofing step-exhaust gas inlet
- 22: exhaust port
- 30: first burner
- 31: second burner
- 50: throttle portion
- 100: air separation device
- 101: combustion-supporting gas conditioning equipment

## Claims

1. An exhaust gas treatment device which is configured to treat exhaust gases discharged from steps of manufacturing carbon fiber from a fibrous substance,
wherein the exhaust gas treatment device includes:
a first combustion furnace (10) which is configured to combust a carbonizing step-exhaust gas discharged from a carbonizing step in which the fibrous substance is carbonized in an inert gas atmosphere; and
a second combustion furnace (20) which is provided at a post-stage of the first combustion furnace (10), and configured to combust a flameproofing step-exhaust gas discharged from a flameproofing step in which the fibrous substance is flameproofed in an air atmosphere and a first combusting step-exhaust gas discharged from the first combustion furnace (10);
the first combustion furnace (10) and the second combustion furnace (20) communicate through a throttle portion (50);
the first combustion furnace (10) is provided with a first burner (30) which is configured to combust a carbonizing step-exhaust gas by a fuel and an oxygen-enriched air; and
an air separation device (100) which is configured to produce nitrogen for producing the inert gas atmosphere in the carbonizing step and the oxygen-enriched air supplied into the first burner (30).

2. The exhaust gas treatment device according to Claim 1, wherein the exhaust gas treatment device further includes a second burner (31) which is configured to supply a fuel into the second combustion furnace (20).

3. A carbon fiber manufacturing equipment including equipment which is configured to produce carbon fiber from a fibrous substance, wherein the carbon fiber manufacturing equipment includes:
a flameproofing furnace (1) which is configured to pre-oxidize and flameproof the fibrous substance in an air atmosphere; and
a carbonizing furnace (2) which is provided at a post-stage of the flameproofing furnace (1) and configured to carbonize the fibrous substance after flameproofing in an inert atmosphere; and
an exhaust gas treatment device according to Claim 1 or 2;
wherein exhaust gas from the flameproofing furnace (1) is discharged to the second combustion furnace (20) and exhaust gas from the carbonizing furnace (2) is discharged to the first combustion furnace (10).

4. An exhaust gas treatment method for treating exhaust gases discharged from steps of manufacturing carbon fiber from a fibrous substance,
wherein the exhaust gas treatment method includes:
a first combusting step in which a carbonizing step-exhaust gas discharged from a carbonizing step in which the fibrous substance is carbonized in an inert gas atmosphere is treated; and
a second combusting step in which a flameproofing step-exhaust gas discharged from a flameproofing step in which the fibrous substance is flameproofed in an air atmosphere and a first combusting step-exhaust gas discharged from the first combustion step are treated;
in the first combusting step, the carbonizing step-exhaust gas is combusted at a low oxygen ratio of 0.8 or less by a fuel and an oxygen-enriched air;
in the second combusting step, the first combusting step-exhaust gas and the flameproofing step-exhaust gas are combusted by using heat of the first combusting step-exhaust gas; and
nitrogen for producing the inert gas atmosphere in the carbonizing step, and the oxygen-enriched air used in the first combusting step are produced by separating air.

5. The exhaust gas treatment method according to Claim 4, wherein the combustion of the first combusting step-exhaust gas and the flameproofing step-exhaust gas is promoted by supplying a fuel in the second combusting step.

6. A carbon fiber manufacturing method including a step in which carbon fiber is produced from a fibrous substance and a step in which exhaust gases discharged from the step in which carbon fiber is produced from a fibrous substance are treated according to an exhaust gas treatment method according to Claim 4 or 5,
wherein the step in which carbon fiber is produced from a fibrous substance includes:
a flameproofing step comprising pre-oxidizing and flameproofing the fibrous substance at 200°C to 300°C in the air atmosphere; and
a carbonizing step comprising carbonizing the fibrous substance after the flameproofing step at 300°C to 2,000°C in the inert gas atmosphere.

## Patentansprüche

1. Abgasbehandlungsvorrichtung, die konfiguriert ist zum Behandeln von Abgasen, die aus Schritten zur Herstellung von Kohlefaser aus einer Fasersubstanz abgeführt werden,
wobei die Abgasbehandlungsvorrichtung beinhaltet:
einen ersten Verbrennungsofen (10), der konfiguriert ist zum Verbrennen eines Karbonisierungsschritt-Abgases, das aus einem Karbonisierungsschritt abgeführt wird, in dem die Fasersubstanz in einer Inertgasatmosphäre karbonisiert wird; und
einen zweiten Verbrennungsofen (20), der in einer Nachstufe des ersten Verbrennungsofens (10) bereitgestellt und konfiguriert ist zum Verbrennen eines Flammfestmachungsschritt-Abgases, das aus einem Flammfestmachungsschritt abgeführt wird, in dem die Fasersubstanz in einer Luftatmosphäre flammfest gemacht und ein erstes Verbrennungsschritt-Abgas aus dem ersten Verbrennungsofen (10) abgeführt wird;
der erste Verbrennungsofen (10) und der zweite Verbrennungsofen (20) durch einen Drosselabschnitt (50) kommunizieren;
der erste Verbrennungsofen (10) mit einem ersten Brenner (30) versehen ist, der konfiguriert ist zum Verbrennen eines Karbonisierungsschritt-Abgases durch einen Brennstoff und eine sauerstoffangereicherte Luft; und
eine Lufttrennvorrichtung (100), die konfiguriert ist zum Erzeugen von Stickstoff zum Erzeugen der Inertgasatmosphäre in dem Karbonisierungsschritt und der in den ersten Brenner (30) eingespeisten sauerstoffangereicherten Luft.

2. Abgasbehandlungsvorrichtung nach Anspruch 1, wobei die Abgasbehandlungsvorrichtung ferner einen zweiten Brenner (31) beinhaltet, der konfiguriert zum Einspeisen eines Brennstoffs in den zweiten Verbrennungsofen (20).

3. Kohlefaserherstellungseinrichtung einschließlich Ausrüstung, die konfiguriert ist zum Erzeugen von Kohlefaser aus einer Fasersubstanz, wobei die Kohlefaserherstellungseinrichtung beinhaltet:
einen Flammfestmachungsofen (1), der konfiguriert ist zum Voroxidieren und Flammfestmachen der Fasersubstanz in einer Luftatmosphäre;
und
einen Karbonisierungsofen (2), der in einer Nachstufe des Flammfestmachungsofens (1) bereitgestellt und konfiguriert ist zum Karbonisieren der Fasersubstanz nach dem Flammfestmachen in einer Inertatmosphäre; und
eine Abgasbehandlungsvorrichtung nach Anspruch 1 oder 2;
wobei Abgas aus dem Flammfestmachungsofen (1) an den zweiten Verbrennungsofen (20) abgeführt wird und Abgas aus dem Karbonisierungsofen (2) an den ersten Verbrennungsofen (10) abgeführt wird.

4. Abgasbehandlungsverfahren zur Behandlung von Abgasen, die aus Kohlefaserherstellungsschritten aus einer Fasersubstanz abgeführt werden,
wobei das Abgasbehandlungsverfahren beinhaltet:
einen ersten Verbrennungsschritt, in dem ein aus einem Karbonisierungsschritt, in dem die Fasersubstanz in einer Inertgasatmosphäre karbonisiert wird, abgeführtes Karbonisierungsschritt-Abgas behandelt wird; und
einen zweiten Verbrennungsschritt, in dem ein aus einem Flammfestmachungsschritt, in dem die Fasersubstanz in einer Luftatmosphäre flammfest gemacht wird, abgeführtes Flammfestmachungsschritt-Abgas und ein aus dem ersten Verbrennungsschritt abgeführtes erstes Verbrennungsschritt-Abgas behandelt werden;
in dem ersten Verbrennungsschritt, das Karbonisierungsschritt-Abgas bei einem niedrigen Sauerstoffverhältnis von 0,8 oder weniger durch einen Brennstoff und eine sauerstoffangereicherte Luft verbrannt wird;
in dem zweiten Verbrennungsschritt, das erste Verbrennungsschritt-Abgas und das Flammfestmachungsschritt-Abgas unter Verwendung von Wärme des ersten Verbrennungsschritt-Abgases verbrannt werden; und
Stickstoff zur Erzeugung der Inertgasatmosphäre in dem Karbonisierungsschritt und die in dem ersten Verbrennungsschritt verwendete sauerstoffangereicherte Luft durch Lufttrennen erzeugt werden.

5. Abgasbehandlungsverfahren nach Anspruch 4, wobei die Verbrennung des ersten Verbrennungsschritt-Abgases und des Flammfestmachungsschritt-Abgases durch Zuführen eines Brennstoffs in dem zweiten Verbrennungsschritt gefördert wird.

6. Kohlefaserherstellungsverfahren einschließlich eines Schritts, in dem Kohlefaser aus einer Fasersubstanz hergestellt wird, und eines Schritts, in dem aus dem Schritt, in dem Kohlefaser aus einer Fasersubstanz hergestellt wird, abgeführte Abgase gemäß einem Abgasbehandlungsverfahren nach Anspruch 4 oder 5 behandelt werden,
wobei der Schritt, in dem Kohlefaser aus einer Fasersubstanz erzeugt wird, beinhaltet:
einen Flammfestmachungsschritt umfassend Voroxidieren und Flammfestmachen der Fasersubstanz bei 200 °C bis 300 °C in der Luftatmosphäre; und
einen Karbonisierungsschritt umfassend Karbonisieren der Fasersubstanz nach dem Flammfestmachungsschritt bei 300 °C bis 2.000 °C in der Inertgasatmosphäre.

## Revendications

1. Dispositif de traitement des gaz d'échappement qui est conçu pour traiter les gaz d'échappement déchargés des étapes de fabrication de fibre de carbone à partir d'une substance fibreuse,
ledit dispositif de traitement des gaz d'échappement comprenant :
un premier four de combustion (10) qui est conçu pour brûler des gaz d'échappement d'étape de carbonisation déchargés d'une étape de carbonisation dans laquelle la substance fibreuse est carbonisée dans une atmosphère de gaz inerte ; et
un second four de combustion (20) qui est disposé au niveau d'un étage postérieur du premier four de combustion (10), et conçu pour brûler un gaz d'échappement d'étape d'ignifugation déchargé d'une étape d'ignifugation dans laquelle la substance fibreuse est ignifugée dans une atmosphère d'air et un premier gaz d'échappement d'étape de combustion déchargé du premier four de combustion (10) ;
le premier four de combustion (10) et le second four de combustion (20) communique par une partie d'étranglement (50) ;
le premier four de combustion (10) étant disposé au niveau d'un premier brûleur (30) qui est configuré pour brûler un gaz d'échappement d'étape de carbonisation par un combustible et un air enrichi en oxygène ; et
un dispositif de séparation d'air (100) qui est conçu pour produire de l'azote en vue de la production d'atmosphère de gaz inerte dans l'étape de carbonisation et de l'air enrichi en oxygène fourni dans le premier brûleur (30).

2. Dispositif de traitement des gaz d'échappement selon la revendication 1, ledit dispositif de traitement des gaz d'échappement comprenant en outre un second brûleur (31) qui est conçu pour fournir un combustible dans le second four de combustion (20).

3. Équipement de fabrication de fibre de carbone comprenant un équipement qui est configuré pour produire de la fibre de carbone à partir d'une substance fibreuse, ledit équipement de fabrication de fibre de carbone comprenant :
un four d'ignifugation (1) qui est conçu pour effectuer une pré-oxydation et ignifuger la substance fibreuse dans une atmosphère d'air ;
et
un four de carbonisation (2) qui est disposé à un étage ultérieur du four d'ignifugation (1) et conçu pour carboniser la substance fibreuse après l'ignifugation dans une atmosphère inerte ; et
un dispositif de traitement des gaz d'échappement selon la revendication 1 ou 2 ;
ledit gaz d'échappement provenant du four d'ignifugation (1) étant déchargé vers le second four de combustion (20) et ledit gaz d'échappement provenant du four de carbonisation (2) étant déchargé vers le premier four de combustion (10).

4. Procédé de traitement des gaz d'échappement permettant de traiter les gaz d'échappement déchargés des étapes de fabrication de fibre de carbone à partir d'une substance fibreuse,
ledit procédé de traitement des gaz d'échappement comprenant :
une première étape de combustion dans laquelle un gaz d'échappement d'étape de carbonisation déchargé d'une étape de carbonisation dans laquelle la substance fibreuse est carbonisée dans une atmosphère de gaz inerte est traité ; et
une seconde étape de combustion dans laquelle des gaz d'échappement d'étape d'ignifugation déchargés d'une étape d'ignifugation dans laquelle la substance fibreuse est ignifugée dans une atmosphère d'air et un premier gaz d'échappement d'étape de combustion déchargé de la première étape de combustion sont traités ;
dans la première étape de combustion, le gaz d'échappement d'étape de carbonisation est brûlé à un faible rapport d'oxygène inférieur ou égal à 0,8 par un combustible et un air enrichi en oxygène ;
dans la seconde étape de combustion, le premier gaz d'échappement d'étape de combustion et les gaz d'échappement d'étape d'ignifugation sont brûlés à l'aide de la chaleur du premier gaz d'échappement d'étape de combustion ; et
l'azote en vue de la production de l'atmosphère de gaz inerte dans l'étape de carbonisation et l'air enrichi en oxygène utilisé dans la première étape de combustion sont produits par séparation de l'air.

5. Procédé de traitement des gaz d'échappement selon la revendication 4, ladite combustion du premier gaz d'échappement d'étape de combustion et des gaz d'échappement d'étape d'ignifugation étant favorisée en fournissant un combustible dans la seconde étape de combustion.

6. Procédé de fabrication de fibre de carbone comprenant une étape dans laquelle la fibre de carbone est produite à partir d'une substance fibreuse et une étape dans laquelle les gaz d'échappement déchargés de l'étape dans laquelle la fibre de carbone est produite à partir d'une substance fibreuse sont traités selon un procédé de traitement des gaz d'échappement selon la revendication 4 ou 5,
ladite étape dans laquelle la fibre de carbone est produite à partir d'une substance fibreuse comprenant :
une étape d'ignifugation comprenant la pré-oxydation et l'ignifugation de la substance fibreuse à une température allant de 200°C à 300°C dans l'atmosphère d'air ; et
une étape de carbonisation comprenant la carbonisation de la substance fibreuse après l'étape d'ignifugation à une température allant de 300°C à 2000°C dans l'atmosphère de gaz inerte.
